# EUROPÄISCHE PATENTANMELDUNG

(11) **EP 4 826 681 A1**
(43) Veröffentlichungstag der Anmeldung: **21.10.2026**
(21) Anmeldenummer: 26161331.9
(22) Anmeldetag: 27.02.2026
(51) Int. Cl.: G06V 20/58, G06V 20/56, G06V 20/64

(54) **VERFAHREN ZUM ERKENNEN EINES OBJEKTS MITTELS EINES CLUSTERS VON RÄUMLICHEN PUNKTEN OBERHALB EINER GELÄNDEEBENE**

(30) Priorität: 16.04.2025 DE 102025114843
(71) Anmelder: CLAAS E-Systems GmbH, 49201 Dissen (DE)
(72) Erfinder: Robbe, Carolin, 49565 Bramsche - Lappenstuhl (DE); Lücke, Andreas, 33184 Altenbeken (DE); Redenius, Jannik, 32361 Pr. Oldendorf (DE); Ziesenis, Jacob, 49201 Dissen (DE); Jürgens, Stefan, 26129 Oldenburg (DE)
(74) Vertreter: CLAAS Gruppe

(57) **Zusammenfassung**

Die vorliegende Erfindung betrifft ein computer-implementiertes Verfahren (2000) zum Erkennen eines Objekts (1040) in einer Feldumgebung (1070), wobei das Objekt (1040) einer Klasse von vordefinierten Objektklassen zuweisbar ist, das Verfahren (2000) umfassend: Erfassen von räumlichen Punkten (P) in der Feldumgebung (1070) mittels eines Sensorsystems (1080); Bestimmen einer Geländeebene (G) mittels der räumlichen Punkte (P); Bestimmen eines Clusters von räumlichen Punkten (P) oberhalb der Geländeebene (G); und Ermitteln eines Objekts (1040), indem das Cluster mittels der Geländeebene (G) einer Klasse der vordefinierten Objektklassen zugeordnet wird.

## Beschreibung

Die vorliegende Erfindung betrifft ein computer-implementiertes Verfahren zum Erkennen eines Objekts in einer Feldumgebung. Ferner betrifft die vorliegende Erfindung eine landwirtschaftliche Arbeitsmaschine.

Die präzise und effiziente Erkennung von Objekten in einer landwirtschaftlichen Feldumgebung - seien es Tiere, Menschen oder Fahrzeuge - spielt eine entscheidende Rolle für vielfältige Anwendungen in der Landwirtschaft. Sobald ein Objekt identifiziert wird, können landwirtschaftliche Maschinen basierend auf diesen Informationen angepasst werden. Erkennt das System beispielsweise einen Baum in der Fahrtrichtung der Maschine, kann der Bediener die Einstellungen derart vornehmen, dass der Baum umfahren wird, wodurch eine Kollision vermieden und ein sicherer Arbeitsablauf gewährleistet werden kann.

Bei der Objekterkennung in der Feldumgebung gelten typischerweise andere Standards als bei Fahrzeugen im Verkehr, da die Anforderungen und Bedingungen sich deutlich unterscheiden. In der Landwirtschaft steht die Identifizierung natürlicher und oft unregelmäßiger Objekte wie Pflanzen, Unkraut oder Bodenkonturen im Vordergrund. Die Feldumgebung erfordert flexible Modelle, die mit variablen Lichtverhältnissen, Wetterbedingungen und unstrukturierten Landschaften umgehen können. Im Gegensatz dazu konzentriert sich die Objekterkennung im Verkehr üblicherweise auf standardisierte Elemente wie Straßenschilder, Fahrspuren und andere Fahrzeuge. Modelle zur Erkennung von Objekten im Straßenverkehr sind demnach üblicherweise unbrauchbar für Feldumgebungen.

Bei der Objekterkennung kommen üblicherweise Clustering-Verfahren zum Einsatz, die darauf abzielen, eine Vielzahl von Datenpunkten in Gruppen oder Cluster zu unterteilen, so dass ähnliche Punkte innerhalb eines Clusters und unterschiedliche Punkte zwischen den Clustern liegen. Diese Verfahren können besonders nützlich sein, um Strukturen und Muster in großen Datenmengen zu identifizieren, ohne dass zuvor spezifische Labels oder Kategorien definiert werden müssen.

Herkömmlicherweise erfolgt das Clustering häufig ohne einen festen Bezug. Dies kann den Nachteil haben, dass die Ergebnisse des Clustering stark von der natürlichen Struktur der Daten abhängen und möglicherweise nicht die tatsächlichen Gegebenheiten der Umgebung widerspiegeln. In komplexen und variablen Feldumgebungen kann dies dazu führen, dass relevante Objekte nicht korrekt identifiziert oder von unerwünschten Hintergrundinformationen getrennt werden. Ohne die Berücksichtigung eines Bezugspunkts kann die Genauigkeit und Robustheit der Cluster-Bildung bzw. Objekterkennung erheblich beeinträchtigt werden, was zu fehlerhaften Klassifizierungen und/oder einer verminderten Effizienz in der Analyse führen kann.

Eine Aufgabe der vorliegenden Erfindung ist es daher, die bisherigen Verfahren und Vorrichtungen derart weiterzuentwickeln, dass Objekte besonders effizient und präzise erkannt werden können.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein computer-implementiertes Verfahren zum Erkennen eines Objekts in einer Feldumgebung. Dabei kann das Objekt einer Klasse von vordefinierten Objektklassen zuweisbar sein. Das Verfahren kann in einem Schritt ein Erfassen von räumlichen Punkten in der Feldumgebung mittels eines Sensorsystems umfassen. In einem weiteren Schritt kann das Verfahren ein Bestimmen einer Geländeebene mittels der räumlichen Punkte umfassen. Das Verfahren kann ferner in einem Schritt ein Bestimmen eines Clusters von räumlichen Punkten oberhalb der Geländeebene umfassen. In einem weiteren Schritt kann das Verfahren ein Ermitteln eines Objekts umfassen, indem das Cluster mittels der Geländeebene einer Klasse der vordefinierten Objektklassen zugeordnet wird.

Die Feldumgebung bzw. ein Feld kann einen begrenzten natürlichen oder landwirtschaftlichen Raum umfassen, in dem Pflanzen angebaut, bearbeitet und geerntet werden. Eine Feldumgebung kann eine von der landwirtschaftlichen Arbeitsmaschine zu bearbeitende Fläche aufweisen. Eine Feldumgebung kann natürliche, infrastrukturelle oder künstliche Elemente wie Flüsse, Bäume, Zäune, Straßen, Bewässerungssysteme und/oder andere Bauwerke umfassen. Eine Feldumgebung oder ein Feld kann als ein technisches System angesehen werden und die räumlichen Punkte der Feldumgebung kann Informationen über den internen Zustand des Felds darstellen.

Das Objekt kann sich auf einen Gegenstand oder Lebewesen beziehen, das sich in der Feldumgebung befindet oder temporär aufhält. Das Objekt kann ein Hindernis für die landwirtschaftliche Arbeitsmaschine darstellen. Beispielsweise kann es sich beim Objekt um ein Tier, einen Menschen, ein Fahrzeug oder ein anderes relevantes Objekt handeln. Jedes Objekt kann dabei jeweils einer Klasse (bspw. Klasse "Mensch") von vordefinierten Objektklassen zugewiesen sein. Die Klasse von vordefinierten Objektklassen kann eine kategorisierte Gruppe von Objekten sein, die durch gemeinsame Formen, Merkmale, Eigenschaften oder Funktionen charakterisiert sind und in einem bestimmten Kontext verwendet werden. Ein Bediener der landwirtschaftlichen Arbeitsmaschine kann vor dem Betrieb bzw. Einsatz in der Feldumgebung eine Reihe von Objektklassen vordefinieren.

Die räumlichen Punkte (auch Punktewolke genannt) können spezifische Positionen oder Standorte im Raum sein, die durch Koordinaten definiert sind, wie zum Beispiel in einem zweidimensionalen oder dreidimensionalen Koordinatensystem. Die räumlichen Punkte können verwendet werden, um geografische Informationen der Feldumgebung darzustellen oder Gruppen und/oder geometrische Formen in der Feldumgebung zu bilden. Die räumlichen Punkte können beispielsweise durch eine diskrete Abtastung mittels des Sensorsystems erfolgen, wobei sich die diskrete Abtastung typischerweise auf die Erfassung von räumlichen Punkten in bestimmten, festgelegten Intervallen oder Positionen bezieht.

Das Cluster kann sich auf eine Ansammlung von gleichartigen oder verwandten räumlichen Punkten beziehen, wobei die räumlichen Punkte durch bestimmte Merkmale oder Eigenschaften miteinander verbunden sind. Diese räumlichen Punkte befinden sich beispielsweise in unmittelbarer Nähe zueinander und bilden eine zusammenhängende Gruppe innerhalb eines größeren Rahmens. Es können auch besonders dichte Punktewolken, d.h. ein vorbestimmtes Volumen mit einer hohen Anzahl an Punkten, als ein Cluster ermittelt werden.

Die Geländeebene kann beispielsweise eine horizontale oder nahezu horizontale Fläche innerhalb eines bestimmten geographischen Gebiets, insbesondere der Feldumgebung, umfassen. Die Geländeebene kann als Referenz bzw. Bezug für Höhenmessungen und topografische Analysen dienen. Die Geländeebene kann natürliche Gegebenheiten wie Wiesen oder Ebenen umfassen oder künstlich geschaffen sein. Die Geländeebene kann die Grundlage für die Beurteilung von Höhenunterschieden und Geländeformen bilden.

Das Bestimmen eines Clusters von räumlichen Punkten oberhalb der Geländeebene kann durch die Analyse der Höhenlage dieser Punkte in Relation zu einer festgelegten Referenzhöhe, die durch die Geländeebene definiert ist, erfolgen. Oberhalb kann bedeuten, dass die räumlichen Punkte eine bestimmte Höhe überschreiten, die als Basislinie dient, wodurch die Punkte klar von denjenigen unterschieden werden, die sich auf oder unter der Geländeebene befinden. Oberhalb kann definiert werden als der Bereich, der sich von der Geländeebene in Richtung entgegen der Schwerkraft erstreckt. Die Geländeebene kann somit einen Bezug bilden, der es ermöglicht, das Cluster präzise einer bestimmten Klasse zuzuordnen.

Vorteilhafterweise kann das Verfahren mittels der Geländeebene eine präzise und objektive Basis zur Klassifizierung von Objekten ermöglichen, da die Geländeebene als klar definierte Höhenlinie fungieren kann, die die räumliche Beziehung der räumlichen Punkte in der Feldumgebung festlegt. Diese klare Abgrenzung kann die Genauigkeit der Ergebnisse ermöglichen und die Identifizierung und Differenzierung zwischen verschiedenen Objektarten verbessern. Darüber hinaus unterstützt die Geländeebene die strukturierte Organisation der räumlichen Punkte, was beispielsweise zu einer schnelleren Verarbeitung und einer fundierteren Entscheidungsfindung führen kann. Die Verwendung der Geländeebene als Referenzhöhe kann die Vergleichbarkeit zwischen unterschiedlichen Datensätzen und Studien erhöhen, was für langfristige Analysen von entscheidender Bedeutung ist.

Des Weiteren kann die landwirtschaftliche Arbeitsmaschine mittels der Erkennung von Objekten, wie beispielsweise Pflanzen, Unkraut oder Hindernissen, vorteilhafterweise schneller, effizienter und/oder sicherer arbeiten. Dies kann zu einer Optimierung des Ernteprozesses führen, da Arbeitsmaschinen in der Lage sind, zielgerichtet und automatisch auf verschiedene Situationen im Feld zu reagieren. Beispielsweise können Arbeitsaggregate basierend auf den erkannten Objekten eingestellt werden. Ein weiterer Vorteil besteht in der Reduzierung des Bedarfs an manueller Überwachung und Steuerung, was nicht nur den Arbeitsaufwand verringern, sondern auch das Risiko menschlicher Fehler minimieren kann.

In einem weiteren Aspekt kann das Verfahren in einem Schritt ein Einstellen einer landwirtschaftlichen Arbeitsmaschine basierend auf dem erkannten Objekt umfassen. Dabei kann sich die landwirtschaftliche Arbeitsmaschine in der Feldumgebung befinden und das Sensorsystem umfassen.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Feldhäcksler, Mähdrescher oder Traktor handeln. Die landwirtschaftliche Arbeitsmaschine kann selbstfahrend und/oder autonom ausgeprägt sein. Das Einstellen der landwirtschaftlichen Arbeitsmaschine kann sich auf den Prozess der Anpassung und Konfiguration der landwirtschaftlichen Arbeitsmaschine beziehen, um Konflikte, die das Objekt hervorführen könnte, zu vermeiden. Das Einstellen kann beispielsweise ein Lenken oder ein Anhalten der landwirtschaftlichen Arbeitsmaschine umfassen. Auf Basis eines erkannten Objekts kann eine automatische Anpassung der Lenkung erfolgen, um sicherzustellen, dass keine Kollisionen mit dem Objekt auftreten. Ferner ist es auch möglich, dass das Einstellen der Arbeitsmaschine eine manuelle Anpassung durch einen Bediener der landwirtschaftlichen Arbeitsmaschine umfasst. Ferner kann das Einstellen umfassen: Eine Justierung von mechanischen Komponenten, eine Kalibrierung elektronischer Systeme sowie eine Anpassung von Parametern wie Geschwindigkeit, Druck und Tiefe, abhängig von Bodenbeschaffenheit, Pflanzenart und Umweltbedingungen.

In einem weiteren Aspekt können die räumlichen Punkte eine Bewegungsgeschwindigkeit, Bewegungsrichtung und/oder Dichteinformation umfassen. Das Verfahren kann ferner in einem Schritt ein Filtern der räumlichen Punkte basierend auf der Bewegungsgeschwindigkeit, Bewegungsrichtung und/oder Dichteinformation umfassen.

Die Bewegungsgeschwindigkeit kann beschreiben, wie schnell sich ein Punkt in eine bestimmte Richtung bewegt, gemessen in Metern pro Sekunde, und kann beispielsweise entscheidend für das Verständnis dynamischer Prozesse sein. Die Bewegungsrichtung kann die Orientierung sein, in die sich ein Punkt bewegt, typischerweise dargestellt durch Winkelangaben oder Vektoren, was für die Navigation und Steuerung von Bedeutung ist. Die Dichteinformation kann die Masse eines Punkts in einem bestimmten Volumen oder auf einer Fläche quantifizieren. Beispielsweise kann die Dichte eines Teils der Feldumgebung bestimmt werden. Dabei kann es sein, dass feste Bestandteile, wie bspw. Bäume, eine höhere Dichte aufweisen als bspw. Lagergetreide.

Das Filtern kann sich auf eine Auswahl von Punkten, deren Bewegungsgeschwindigkeit, Bewegungsrichtung und/oder Dichteinformation innerhalb eines vordefinierten Bereichs liegt, beziehen. Dabei können beispielsweise bewegte Objekte von langsamen unterscheiden und potenzielle Anomalien identifiziert werden. Ebenso kann das Filtern ermöglichen, nur die Punkte zu betrachten, die sich in bestimmten Trajektorien bewegen, um Zielbewegungen zu verfolgen oder Trends zu erkennen. Darüber hinaus kann die Berücksichtigung der Dichteinformation dazu beitragen, Cluster oder Hotspots in der räumlichen Verteilung zu identifizieren, indem entweder Punkte in hochdichten Bereichen hervorgehoben oder solche in niedrigen Dichtezonen ausgeschlossen werden.

In einem weiteren Aspekt kann das Verfahren in einem Schritt ein Ermitteln der Position des Sensorsystems in der Feldumgebung und Anpassen der Geländeebene an die Position des Sensorsystems umfassen.

Das Ermitteln der Position des Sensorsystems in der Feldumgebung kann die Bestimmung der räumlichen Koordinaten des Systems umfassen, um dessen Lage im dreidimensionalen Raum zu erfassen. Dies kann beispielsweise durch verschiedene Techniken wie GPS, Inertialsensoren oder andere Ortungssysteme erfolgen. Anschließend kann die Geländeebene an die ermittelte Position des Sensorsystems angepasst werden, was bedeuten kann, dass die Geländeebene bzw. -oberfläche dynamisch in Übereinstimmung mit der Höhe und Ausrichtung des Sensors modifiziert wird. Diese Anpassung kann beispielsweise sicherstellen, dass die erfassten räumlichen Punkte korrekt relativ zur tatsächlichen Geländeform bzw. Feldumgebung interpretiert werden.

In einem weiteren Aspekt kann die Geländeebene bestimmt worden sein, indem ein mathematisches Modell an die räumlichen Punkte angepasst wird, wobei das mathematische Modell optional eine lineare Gleichung ist.

Die Geländeebene kann als eine mathematisch definierte Fläche verstanden werden, die die topografischen Eigenschaften eines bestimmten Gebiets beschreibt. Das mathematische Modell im Kontext der Geländeebene kann eine mathematische Darstellung der Topografie eines bestimmten Gebiets sein, die beispielsweise genutzt wird, um die Höhenlage und die Form der Geländeoberfläche zu beschreiben. Das mathematische Modell umfasst typischerweise Variablen, die die räumlichen Punkte repräsentieren, sowie Gleichungen oder Funktionen, die die Beziehung zwischen diesen Punkten und deren Höhen definieren. Beispielsweise kann das mathematische Modell eine lineare Gleichung verwenden, um eine einfache, im Wesentlichen flache Fläche bzw. Ebene zu beschreiben, oder komplexere mathematische Funktionen, um unregelmäßige oder hügelige Landschaften zu erfassen. Das mathematische Modell kann eine kontinuierliche Gleichung sein, die die Höhenverteilung über ein Gebiet beschreibt. Das mathematische Modell kann die Geländeoberfläche als eine glatte, durchgehende Funktion darstellen, anstatt sie nur durch diskrete Punkte zu definieren. Das Anpassen kann sich auf den Prozess beziehen, bei dem ein mathematisches Modell oder eine Funktion so verändert oder optimiert wird, dass es besser zu einem Datensatz oder zu beobachteten Werten passt. In der Regel kann das Anpassen durch die Minimierung der Abweichungen zwischen den vorhergesagten Werten des Modells und den tatsächlichen Messungen geschehen, die in der Realität erfasst wurden. Das Anpassen kann verschiedene Methoden umfassen, wie z.B. die kleinste-Quadrate-Anpassung, bei der die Summe der quadrierten Unterschiede zwischen den beobachteten und den vorhergesagten Werten minimiert wird.

In einem weiteren Aspekt kann das Cluster von räumlichen Punkten mittels DBSCAN, K-Means-Methode, Gaussian Mixture Models (GMM) oder distance-based Clustering bestimmt werden. Ferner kann ein Abstand der räumlichen Punkte zur Geländeebene beim Bestimmen des Clusters berücksichtigt werden.

In einem weiteren Aspekt können die räumlichen Punkte eine Bewegungsgeschwindigkeit und/oder Bewegungsrichtung umfassen. Das Cluster von räumlichen Punkten kann oberhalb der Geländeebene bestimmt werden, indem eine Relation der Bewegungsgeschwindigkeit und/oder Bewegungsrichtung der räumlichen Punkte zur Geländeebene bestimmt wird und die räumlichen Punkte basierend auf der Relation dem Cluster zugeordnet werden.

Beispielsweise kann durch die Verwendung von Bewegungsgeschwindigkeit und/oder Bewegungsrichtung in Form von Doppler-Informationen, die aus der Analyse der Frequenzverschiebung von Signalen stammen, präzise ermittelt werden, wie sich die räumlichen Punkte relativ zur Geländeebene bewegen. Die Doppler-Informationen können ermöglichen, Veränderungen in der Geschwindigkeit und Richtung der räumlichen Punkte zu erfassen, was eine differenzierte Analyse der räumlichen Verteilung und Dynamik der Objekte oberhalb der Geländeebene unterstützen kann.

In einem weiteren Aspekt kann jeder Klasse der vordefinierten Objektklassen eine vorbestimmte Distanz zugeordnet sein. Dabei kann das Cluster von räumlichen Punkten einer Klasse zugeordnet werden, indem eine relative Distanz des Clusters zur Geländeebene ermittelt und mit der vorbestimmten Distanz verglichen wird.

Ein Cluster, das sich in einer größeren Distanz zur Geländeebene befindet, könnte beispielsweise aufgrund der Größe bzw. Höhe als Baum klassifiziert werden, während ein Cluster, das sich in unmittelbarer Nähe zur Geländeebene befindet, als Hund identifiziert werden kann.

In einem weiteren Aspekt kann jeder Klasse der vordefinierten Objektklassen eine vorbestimmte 3D Struktur zugeordnet sein. Dabei kann das Cluster von räumlichen Punkten einer Klasse basierend auf der vorbestimmte 3D Struktur zugeordnet werden.

Zum Beispiel könnte in einer vordefinierten Objektklasse wie "Mensch" eine 3D-Struktur definiert sein, die typischerweise die Höhe, Breite und das Volumen eines durchschnittlichen Menschen darstellt. Für die Klasse "Bäume" könnte eine andere 3D-Struktur festgelegt werden, die die Form der Baumkrone und den Stamm berücksichtigt.

In einem weiteren Aspekt können die räumlichen Punkte Rückstreu-Koeffizienten (RCS), Doppler-Informationen und/oder Transpolarisationen umfassen. Das Cluster von räumlichen Punkten kann oberhalb der Geländeebene bestimmt werden, indem die RCS, Doppler-Informationen und/oder Transpolarisationen der räumlichen Punkte analysiert werden. Ferner kann das Cluster einer Klasse zugeordnet werden, indem die RCS, Doppler-Informationen und/oder Transpolarisationen der räumlichen Punkte analysiert werden.

In einem weiteren Aspekt kann das Sensorsystem ein LIDAR-, RADAR- und/oder Kamerasystem umfassen.

LIDAR-Systeme können eine Erfassung von Punktewolken bzw. 3D-Daten ermöglichen, indem sie die Zeit messen, die Lichtpulse benötigen, um zu Objekten und zurück zu gelangen. RADAR-Systeme können eine Erfassung von Objekten in ihrer Umgebung ermöglichen, indem sie elektromagnetische Wellen aussenden und die Zeit messen, die diese Wellen benötigen, um zu den Objekten zu gelangen und zurückzukehren. Darüber hinaus kann die Kombination von LIDAR und RADAR für eine umfassendere Datenerfassung sorgen, da RADAR auch bei schlechten Sichtverhältnissen wie Nebel oder Regen effektiv arbeiten könnte, was die Robustheit der Datensammlung möglicherweise steigert. Dieses Sensorsystem ist beispielsweise in der Lage, komplexe und dynamische Umgebungen detailliert zu erfassen, was für Anwendungen in der autonomen Fahrzeugtechnik von entscheidender Bedeutung sein kann. Die Echtzeitdatenerfassung kann es ermöglichen, Algorithmen schnell an sich ändernde Umgebungsbedingungen anzupassen, während die multisensorielle Fusion die Stärken der einzelnen Technologien kombiniert und so die Objekterkennung und -klassifizierung verbessern könnte.

In einem weiteren Aspekt kann das Verfahren in einem Schritt ein Erfassen eines Kamerabildes der Feldumgebung umfassen. Das Verfahren kann in einem weiteren Schritt ein Ermitteln einer Horizontlinie im Kamerabild umfassen. In einem weiteren Schritt kann das Verfahren ein Anpassen der Geländeebene mittels der Horizontlinie umfassen.

Die Horizontlinie kann die projektionale Linie sein, die den Schnittpunkt zwischen der Sichtlinie des Beobachters und der Erdoberfläche definiert, an dem die Atmosphäre und die Oberfläche der Erde visuell zusammentreffen. Diese Horizontlinie kann als Referenzpunkt für die räumliche Orientierung dienen und kann beispielsweise helfen, die Perspektive der aufgenommenen Szene zu verstehen. Beispielsweise kann die Geländeebene basierend auf der erkannten Horizontlinie angepasst oder kalibriert werden, um sicherzustellen, dass die Daten korrekt interpretiert und in der weiteren Analyse verwendet werden können. Dies trägt dazu bei, die Genauigkeit der räumlichen Informationen zu verbessern und eine präzisere Modellierung der Umgebung zu ermöglichen.

In einem weiteren Aspekt kann das Verfahren in einem Schritt Erfassen von räumlichen Vergleichspunkten in der Feldumgebung mittels eines Vergleichssensorsystems umfassen. Das Verfahren kann in einem weiteren Schritt ein Bestimmen einer Vergleichsgeländeebene mittels der räumlichen Vergleichspunkte umfassen. In einem weiteren Schritt kann das Verfahren ein Bestimmen eines Vergleichsclusters von räumlichen Vergleichspunkten oberhalb der Vergleichsgeländeebene umfassen. Das Verfahren kann in einem weiteren Schritt ein Anpassen des ermittelten Objekts umfassen, indem ein Schnittmengen-cluster aus Cluster und Vergleichscluster gebildet wird und das Schnittmengen-cluster einer Klasse der vordefinierten Objektklassen zugeordnet wird.

Ein weiterer Aspekt bezieht sich auf ein System zur Datenverarbeitung für eine landwirtschaftliche Arbeitsmaschine, umfassend einen Prozessor, der so angepasst und/oder konfiguriert ist, dass er das Verfahren nach einem der vorhergehenden Aspekte ausführt.

Das System zur Datenverarbeitung kann die Geländeebene, die mittels der räumlichen Punkte bestimmt wurde, und die Objektklassen bereitstellen, empfangen und/oder nutzen. Die Geländeebene kann in gespeicherter, digitaler Form auf dem System vorliegen. Dies kann bedeuten, dass die Geländeebene so aufbereitet wurde, dass sie direkt auf dem Prozessor einsatzbereit ist. Durch die Speicherung der Geländeebene und der Objektklassen auf dem System kann die landwirtschaftliche Arbeitsmaschine effizient und in Echtzeit darauf zugreifen, um Objekte in Form von räumlichen Punkten zu identifizieren und einer Klasse der Objektklassen zuzuordnen. Diese lokale Speicherung ermöglicht beispielsweise eine schnelle Verarbeitung und reduziert die Abhängigkeit von externen Datenquellen oder einer kontinuierlichen Internetverbindung, was besonders in abgelegenen landwirtschaftlichen Gebieten von Vorteil sein kann.

Ein weiterer Aspekt bezieht sich auf eine landwirtschaftliche Arbeitsmaschine mit einem System zur Datenverarbeitung nach einem der vorhergehenden Aspekte.

Die landwirtschaftliche Arbeitsmaschine kann mit einem Sensorsystem ausgestattet sein, das für die Erfassung von räumlichen Punkten, umfassend Informationen über die Feldumgebung, eingerichtet ist. Die erfassten räumlichen Punkte können von dem System zur Datenverarbeitung verwendet werden (bzw. diesem zur Verfügung gestellt werden). Sensorsystem und System zur Datenverarbeitung können in Verbindung stehen und Daten austauschen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können. Dabei können gespeicherte Anweisungen ermöglichen, die Schritte nach dem Verfahren auszuführen, wenn eine entsprechende datenverarbeitende Maschine durch die Software gesteuert oder geregelt wird. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird. Alle Aspekte des Verfahrens bzw. Verfahrensschritte können möglicherweise automatisiert ablaufen.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung einer landwirtschaftlichen Arbeitsmaschine mit einem System zur Datenverarbeitung gemäß einer Ausführungsform;
- Fig. 2: schematische Darstellung eines computer-implementierten Verfahren zum Erkennen eines Objekts in einer Feldumgebung gemäß einer Ausführungsform;
- Fig. 3: eine schematische Darstellung der Geländeebene, räumlichen Punkte und eines ersten Clusters und eines zweiten Clusters in einer Seitenansicht gemäß einer Ausführungsform;
- Fig. 4A: eine schematische Darstellung der räumlichen Punkte in einer perspektivischen Ansicht gemäß einer Ausführungsform; und
- Fig. 4B: eine schematische Darstellung der Geländeebene, die aus den räumlichen Punkten gemäß Fig. 4A ermittelt wurde, in einer perspektivischen Ansicht gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

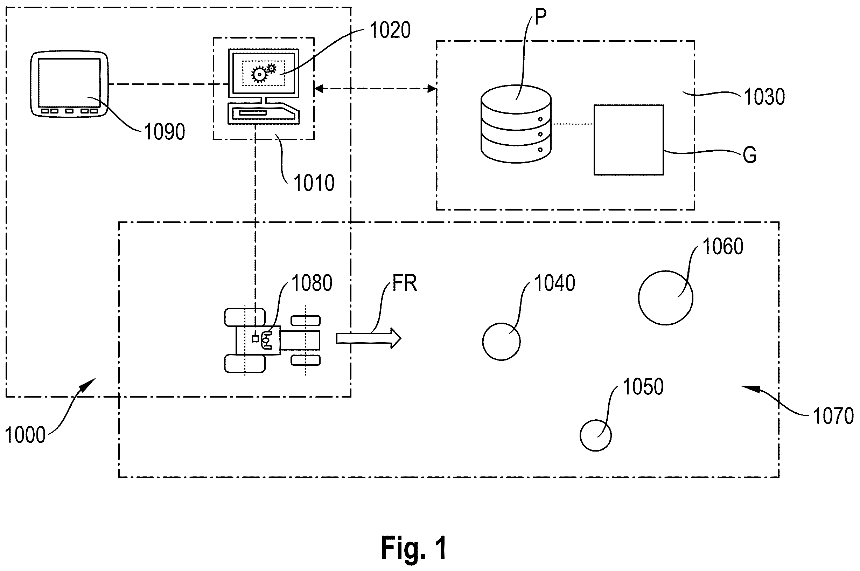

Fig. 1 zeigt eine schematische Darstellung einer landwirtschaftlichen Arbeitsmaschine 1000 mit einem System 1010 zur Datenverarbeitung gemäß einer Ausführungsform.

Die landwirtschaftliche Arbeitsmaschine 1000 befindet sich in einer Feldumgebung 1070, wobei es sich bei der Feldumgebung 1070 in diesem Beispiel um eine begrenzte natürliche, landwirtschaftliche Fläche handelt, auf der Pflanzen angebaut, bearbeitet und geerntet werden. Die landwirtschaftliche Arbeitsmaschine 1000 bearbeitet diese Fläche, indem sie sich in die Fahrtrichtung FR bewegt und beispielsweise Erntegut erntet. In der Feldumgebung 1070 befindet sich ein Objekt 1040, ein Zweitobjekt 1050 und ein Drittobjekt 1060. Diese Objekte 1040, 1050, 1060 können Hindernisse für die landwirtschaftlichen Arbeitsmaschine 1000 darstellen. Ferner können die Objekte 1040, 1050, 1060 auch Ziele (bspw. im Sinne von Nutzpflanzen die geerntet werden sollen) sein, die die landwirtschaftliche Arbeitsmaschine 1000 während des Ernteprozesses ansteuern soll.

Ferner kann ein Computersystem 1030 zum Verarbeiten von räumlichen Punkte P und einer Geländeebene G vorgesehen sein. Das Computersystem 1030 umfasst beispielsweise Mittel zum Empfangen und Senden von räumlichen Punkten P. Entsprechend kann die räumlichen Punkten P und die Geländeebene G von dem System 1010 zur Datenverarbeitung, das einen Prozessor 1020 aufweist, ermittelt, empfangen und gespeichert werden. Die Geländeebene G kann für die Objekterkennung offline auf der landwirtschaftlichen Arbeitsmaschine 1000 verwendet werden. Die räumlichen Punkte P und die Geländeebene G können in einer Datenbank des Computersystems 1030 gespeichert sein.

Die landwirtschaftliche Arbeitsmaschine 1000 kann mit einem Sensorsystem 1080 ausgestattet sein, das für das Erfassen von räumlichen Punkten P in der Feldumgebung 1070 mittels eines Sensorsystems 1080 eingerichtet ist.

Das Sensorsystem 1080 kann ein LIDAR-, RADAR- und/oder Kamera-system umfassen. LIDAR kann eine hochpräzise Erfassung von Punktewolken bzw. 3D-Daten ermöglichen, die anschließend beispielsweise in einem Vektor gespeichert werden kann. Die LIDAR Erfassung kann erfolgen, indem die Zeit gemessen wird, die Lichtpulse benötigen, um zu Objekten und zurück zu gelangen. Die erfassten räumlichen Punkte P bzw. Vektoren können von dem System 1010 zur Datenverarbeitung verwendet werden (bzw. diesem zur Verfügung gestellt werden). Das Sensorsystem 1080 und System 1010 zur Datenverarbeitung können in Verbindung stehen und Daten austauschen. Die räumlichen Punkte P können vom Sensorsystem 1080 erfasst werden und zur weiteren Verarbeitung an das System 1010 gesendet werden. Mittels des Systems 1010 zur Datenverarbeitung kann das Objekt 1040 in der Feldumgebung 1070 erkannt werden, indem ein Verfahren zur Objekterkennung ausgeführt wird.

Die landwirtschaftliche Arbeitsmaschine 1000 kann ferner eine Ausgabeeinrichtung 1090 aufweisen, um beispielsweise die Geländeebene G, räumliche Punkte P und/oder erkannte Objekte 1040 einem Bediener anzuzeigen. Somit ist es möglich, dass die landwirtschaftliche Arbeitsmaschine 1000 manuell durch einen Bediener angepasst wird, sobald ein erkanntes Objekt 1040, beispielsweise in Kombination mit einem Kamerabild, auf der Ausgabeeinrichtung 1090 gezeigt wird. Aus Gründen der besseren Darstellung ist es ferner möglich, dass die Geländeebene G und räumlichen Punkte P auf der Ausgabeeinrichtung 1090 mit einem Bild, das von einem Kamerasystem erfasst wird, überlagert wird. Es ist somit möglich, dass die 3D Informationen der räumlichen Punkte P mit den 2D Informationen eines Bildes kombiniert werden. Vorteilhafterweise kann die landwirtschaftliche Arbeitsmaschine 1000 mittels der Erkennung von Objekten effizienter und sicherer arbeiten.

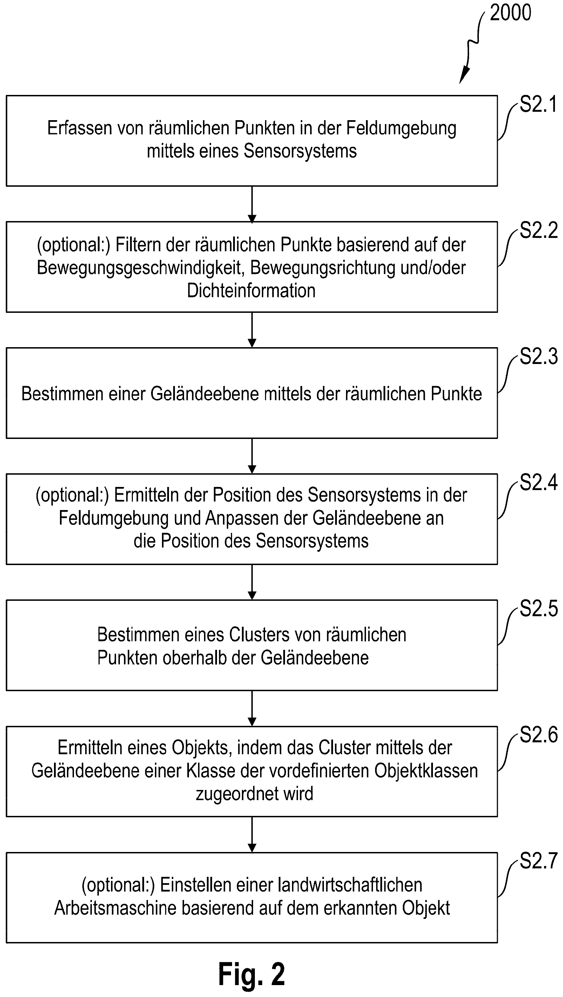

Fig. 2 zeigt eine schematische Darstellung eines computer-implementierten Verfahren 2000 zum Erkennen eines Objekts 1040 in einer Feldumgebung 1070 gemäß einer Ausführungsform.

Das Verfahren 1000 umfasst in einem ersten Schritt S2.1 ein Erfassen von räumlichen Punkten P in der Feldumgebung 1070 mittels des Sensorsystems 1080. Die räumlichen Punkte P sind beispielhaft spezifische Positionen oder Standorte in der Feldumgebung 1070, die durch Koordinaten definiert sind, wie zum Beispiel in einem zweidimensionalen oder dreidimensionalen Koordinatensystem.

In einem weiteren optionalen Schritt S2.2 umfasst das Verfahren 1000 ein Filtern der räumlichen Punkte P basierend auf der Bewegungsgeschwindigkeit, Bewegungsrichtung und/oder Dichteinformation. Mittels des Filterns können beispielsweise bewegte Objekte von langsamen unterschieden und potenzielle Anomalien identifizieren werden. Ebenso kann das Filtern ermöglichen, nur die räumlichen Punkte P zu betrachten, die sich in bestimmten Trajektorien bewegen, um Zielbewegungen zu verfolgen oder Trends zu erkennen.

In einem weiteren Schritt S2.3 umfasst das Verfahren 1000 ein Bestimmen einer Geländeebene G mittels der räumlichen Punkte P. Die Geländeebene G kann beispielsweise eine horizontale oder nahezu horizontale Fläche innerhalb der Feldumgebung 1070 umfassen. Die Geländeebene G kann dabei als Referenz bzw. Bezug für Höhenmessungen und topografische Analysen der Feldumgebung 1070 dienen. Die Geländeebene G kann auch als Geländefläche, Feldfläche, Bodenfläche, Flächenprofil, Plane oder Bestandsflächen bezeichnet werden.

In einem weiteren optionalen Schritt S2.4 umfasst das Verfahren 1000 ein Ermitteln der Position des Sensorsystems 1080 in der Feldumgebung 1070 und Anpassen der Geländeebene G an die Position des Sensorsystems 1080. Mittels der Position des Sensorsystems 1080 kann die Geländeebene G dynamisch in Übereinstimmung mit der Höhe und Ausrichtung des Sensorsystems 1080 modifiziert werden. Diese Anpassung kann beispielsweise sicherstellen, dass die erfassten räumlichen Punkte P korrekt relativ zur tatsächlichen Geländeform bzw. Feldumgebung 1070 interpretiert werden.

In einem weiteren Schritt S2.5 umfasst das Verfahren 1000 ein Bestimmen eines Clusters von räumlichen Punkten P oberhalb der Geländeebene G. Das Cluster kann sich auf eine Ansammlung von benachbarten Punkten P beziehen. Der Begriff "Oberhalb" kann definiert werden als der Bereich, der sich von der Geländeebene G in Richtung entgegen der Schwerkraft erstreckt. Beispielsweise kann das Cluster von räumlichen Punkten P oberhalb der Geländeebene G bestimmt werden, indem eine Relation der Bewegungsgeschwindigkeit und/oder Bewegungsrichtung der räumlichen Punkte P zur Geländeebene G bestimmt wird und die räumlichen Punkte P basierend auf der Relation dem Cluster zugeordnet werden.

In einem weiteren Schritt S2.6 umfasst das Verfahren 1000 ein Ermitteln eines Objekts 1040, indem das Cluster mittels der Geländeebene G einer Klasse der vordefinierten Objektklassen zugeordnet wird. Die Geländeebene G kann einen Bezug bilden, der es ermöglicht, ein Cluster präzise einer bestimmten Klasse zuzuordnen. Analog können das Zweitobjekt 1050 und Drittobjekt 1060 ermittelt werden.

In einem weiteren optionalen Schritt S2.7 umfasst das Verfahren 1000 ein Einstellen einer landwirtschaftlichen Arbeitsmaschine 1000 basierend auf dem erkannten Objekt 1040. Auf Basis des erkannten Objekts 1040 kann eine automatische Anpassung der Lenkung der landwirtschaftlichen Arbeitsmaschine 1000 erfolgen, um sicherzustellen, dass keine Kollisionen mit dem Objekt 1040 auftreten.

Das in Fig. 1 dargestellte System 1010 zur Datenverarbeitung der landwirtschaftlichen Arbeitsmaschine 1000 kann beispielsweise einen Prozessor 1020 umfassen, der so angepasst und/oder konfiguriert ist, dass er das Verfahren 2000 ausführt.

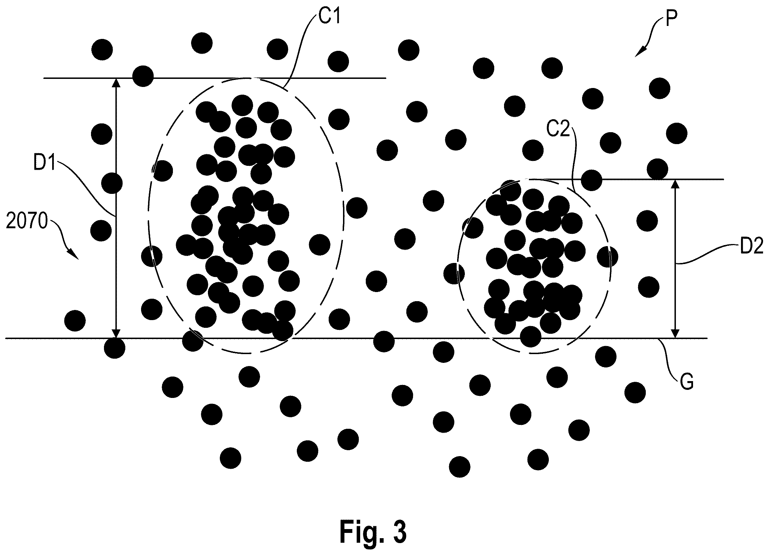

Fig. 3 zeigt eine schematische Darstellung der Geländeebene G, räumlichen Punkte P und eines ersten Clusters C1 und eines zweiten Clusters C2 in einer Seitenansicht gemäß einer Ausführungsform. Die räumlichen Punkte P wurden von dem Sensorsystem 1080 der landwirtschaftlichen Arbeitsmaschine 1000 erfasst und bilden die Feldumgebung 1070 ab. Die Cluster C1, C2 wurden bestimmt, indem die räumlichen Punkten P oberhalb der Geländeebene G ermittelt wurden und die Cluster aufgrund der Dichte der räumlichen Punkte P analysiert wurde. Besonders dicht beieinander liegende Punkte wurde jeweils zu einem Cluster C1, C2 zusammengefasst, d.h. es wurde die Dichte der räumlichen Punkte P berücksichtigt.

Jedes Cluster C1, C2 kann mittels der Geländeebene G einer Klasse der vordefinierten Objektklassen "Mensch" oder "Hund" zugeordnet werden. Dabei ist jede Klasse der vordefinierten Objektklassen eine vorbestimmte Distanz zugeordnet. Beispielsweise ist die Objektklasse "Mensch" einer ersten vorbestimmten Distanz und die Objektklasse "Hund" einer zweiten vorbestimmten Distanz zugeordnet. Jedes Cluster C1, C2 wird einer Klasse zugeordnet, indem eine relative Distanz D1, D2 des Clusters zur Geländeebene G ermittelt und mit der vorbestimmten Distanz verglichen wird. Hierbei wurde vorliegend festgestellt, dass die relative Distanz D1 der ersten vorbestimmten Distanz entspricht und das erste Cluster C1 somit der Objektklasse "Mensch" zugeordnet werden kann. Mit anderen Worten wird dasjenige Cluster, das sich in einer größeren Distanz zur Geländeebene G befindet, aufgrund der Größe bzw. Höhe als Mensch klassifiziert. Analog wurde festgestellt, dass die relative Distanz D2 der zweiten vorbestimmten Distanz entspricht und das zweite Cluster C2 somit der Objektklasse "Hund" zugeordnet werden kann.

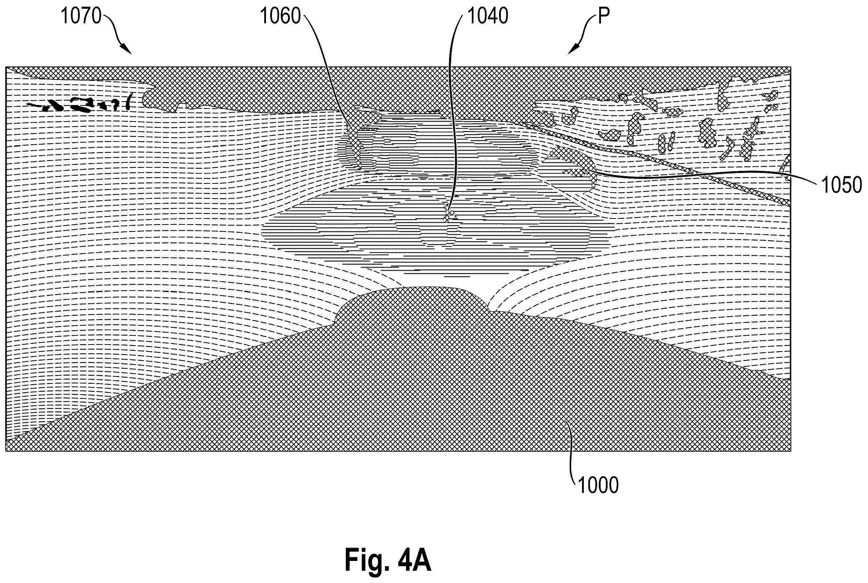

Fig. 4A zeigt eine schematische Darstellung der räumlichen Punkte P in einer perspektivischen Ansicht gemäß einer Ausführungsform. In den räumlichen Punkte P sind das Objekt 1040, das Zweitobjekt 1050 und das Drittobjekt 1060 dargestellt.

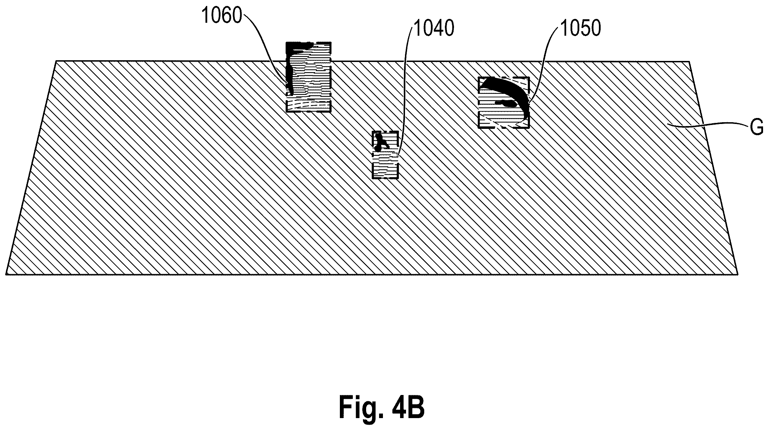

Fig. 4B zeigt eine schematische Darstellung der Geländeebene G, die aus den räumlichen Punkten P gemäß Fig. 4A ermittelt wurde, in einer perspektivischen Ansicht gemäß einer Ausführungsform.

Das Objekt 1040, das Zweitobjekt 1050 und das Drittobjekt 1060 können erkannt werden, indem jedem der Objekte 1040, 1050, 1060 ein Cluster mittels der Geländeebene G einer Klasse der vordefinierten Objektklassen zugeordnet wird.

### Bezugszeichenliste

- 1000: Landwirtschaftliche Arbeitsmaschine
- 1010: System zur Datenverarbeitung
- 1020: Prozessor
- 1030: Computersystem
- 1040: Objekt
- 1050: Zweitobjekt
- 1060: Drittobjekt
- 1070: Feldumgebung
- 1080: Sensorsystem
- 1090: Ausgabeeinrichtung

- 2000: Verfahren zum Erkennen eines Objekts
- S2.1-S2.5: Verfahrensschritte

- G: Geländeebene
- P: räumliche Punkte
- O: erkanntes Objekt
- C1: erstes Cluster
- C2: zweites Cluster
- D1, D2: relative Distanz
- FR: Fahrtrichtung

## Patentansprüche

1. Computer-implementiertes Verfahren (2000) zum Erkennen eines Objekts (1040) in einer Feldumgebung (1070), wobei das Objekt (1040) einer Klasse von vordefinierten Objektklassen zuweisbar ist,
das Verfahren (2000) umfassend:
Erfassen von räumlichen Punkten (P) in der Feldumgebung (1070) mittels eines Sensorsystems (1080);
Bestimmen einer Geländeebene (G) mittels der räumlichen Punkte (P);
Bestimmen eines Clusters von räumlichen Punkten (P) oberhalb der Geländeebene (G); und
Ermitteln eines Objekts (1040), indem das Cluster mittels der Geländeebene (G) einer Klasse der vordefinierten Objektklassen zugeordnet wird.

2. Verfahren (2000) nach Anspruch 1,
umfassend:
Einstellen einer landwirtschaftlichen Arbeitsmaschine (1000) basierend auf dem erkannten Objekt (1040), wobei sich die landwirtschaftliche Arbeitsmaschine (1000) in der Feldumgebung (1070) befindet und das Sensorsystem (1080) umfasst.

3. Verfahren (2000) nach Anspruch 1 oder 2, wobei die räumlichen Punkte (P) eine Bewegungsgeschwindigkeit, Bewegungsrichtung und/oder Dichteinformation umfassen, das Verfahren (2000) ferner umfassend:
Filtern der räumlichen Punkte (P) basierend auf der Bewegungsgeschwindigkeit, Bewegungsrichtung und/oder Dichteinformation.

4. Verfahren (2000) nach einem der vorhergehenden Ansprüche,
umfassend:
Ermitteln der Position des Sensorsystems (1080) in der Feldumgebung (1070) und Anpassen der Geländeebene (G) an die Position des Sensorsystems (1080).

5. Verfahren (2000) nach einem der vorhergehenden Ansprüche, wobei die Geländeebene (G) bestimmt wurde, indem ein mathematisches Modell an die räumlichen Punkte (P) angepasst wird, wobei das mathematische Modell optional eine lineare Gleichung ist.

6. Verfahren (2000) nach einem der vorhergehenden Ansprüche, wobei das Cluster von räumlichen Punkten (P) mittels DBSCAN, K-Means-Methode, Gaussian Mixture Models (GMM) oder distance-based Clustering bestimmt wird und ein Abstand der räumlichen Punkte (P) zur Geländeebene (G) beim Bestimmen des Clusters berücksichtigt wird.

7. Verfahren (2000) nach einem der vorhergehenden Ansprüche, wobei die räumlichen Punkte (P) eine Bewegungsgeschwindigkeit und/oder Bewegungsrichtung umfassen und das Cluster von räumlichen Punkten (P) oberhalb der Geländeebene (G) bestimmt wird, indem eine Relation der Bewegungsgeschwindigkeit und/oder Bewegungsrichtung der räumlichen Punkte (P) zur Geländeebene (G) bestimmt wird und die räumlichen Punkte (P) basierend auf der Relation dem Cluster zugeordnet werden.

8. Verfahren (2000) nach einem der vorhergehenden Ansprüche, wobei jeder Klasse der vordefinierten Objektklassen eine vorbestimmte Distanz zugeordnet ist und wobei das Cluster von räumlichen Punkten (P) einer Klasse zugeordnet wird, indem eine relative Distanz des Clusters zur Geländeebene (G) ermittelt und mit der vorbestimmten Distanz verglichen wird.

9. Verfahren (2000) nach einem der vorhergehenden Ansprüche, wobei jeder Klasse der vordefinierten Objektklassen eine vorbestimmte 3D Struktur zugeordnet ist und wobei das Cluster von räumlichen Punkten (P) einer Klasse basierend auf der vorbestimmte 3D Struktur zugeordnet wird.

10. Verfahren (2000) nach einem der vorhergehenden Ansprüche, wobei die räumlichen Punkte (P) Rückstreu-Koeffizienten (RCS), Doppler-Informationen und/oder Transpolarisationen umfassen und wobei das Cluster von räumlichen Punkten (P) oberhalb der Geländeebene (G) bestimmt wird oder das Cluster einer Klasse zugeordnet wird, indem die RCS, Doppler-Informationen und/oder Transpolarisationen der räumlichen Punkte (P) analysiert werden.

11. Verfahren (2000) nach einem der vorhergehenden Ansprüche, wobei das Sensorsystem (1080) ein LIDAR-, RADAR- und/oder Kamera-system umfasst.

12. Verfahren (2000) nach einem der vorhergehenden Ansprüche,
umfassend:
Erfassen eines Kamerabildes der Feldumgebung (1070);
Ermitteln einer Horizontlinie im Kamerabild; und
Anpassen der Geländeebene (G) mittels der Horizontlinie.

13. Verfahren (2000) nach einem der vorhergehenden Ansprüche,
umfassend:
Erfassen von räumlichen Vergleichspunkten in der Feldumgebung (1070) mittels eines Vergleichssensorsystems;
Bestimmen einer Vergleichsgeländeebene mittels der räumlichen Vergleichspunkte;
Bestimmen eines Vergleichsclusters von räumlichen Vergleichspunkten oberhalb der Vergleichsgeländeebene; und
Anpassen des ermittelten Objekts, indem ein Schnittmengen-cluster aus Cluster und Vergleichscluster gebildet wird und das Schnittmengen-cluster mittels der Vergleichsgeländeebene einer Klasse der vordefinierten Objektklassen zugeordnet wird.

14. System (1010) zur Datenverarbeitung für eine landwirtschaftliche Arbeitsmaschine (2000), umfassend einen Prozessor (1020), der so angepasst und/oder konfiguriert ist, dass er das Verfahren nach einem der vorherigen Ansprüche ausführt.

15. Landwirtschaftliche Arbeitsmaschine (2000) mit einem System (1010) zur Datenverarbeitung nach Anspruch 14.
